# EUROPEAN PATENT APPLICATION

(11) **EP 4 752 401 A1**
(43) Date of publication of application: **03.06.2026**
(21) Application number: 24862874.5
(22) Date of filing: 05.09.2024
(51) Int. Cl.: F16J 15/10, C10M 169/04, C10N 40/02, C10N 40/04

(54) **OIL/SEAL LUBRICATION SYSTEM**

(30) Priority: 08.09.2023 JP 2023146018
(71) Applicant: ENEOS CORPORATION, Chiyoda-ku Tokyo 100-8162 (JP); NOK Corporation, Minato-ku Tokyo 105-8585 (JP)
(72) Inventor: SHITARA Yuji, Tokyo 100-8162 (JP); MATSUOKA Mayuko, Tokyo 100-8162 (JP); KOYATA Saki, Tokyo 100-8162 (JP); AOYAGI Yuichi, Tokyo 105-8585 (JP); KAWASAKI Hiromu, Tokyo 105-8585 (JP); ANZAI Takahiro, Tokyo 105-8585 (JP)
(74) Representative: Grünecker Patent- und Rechtsanwälte PartG mbB
(86) International application number: PCT/JP2024/031900
(87) International publication number: WO 2025/053225

(57) **Abstract**

An oil/seal lubrication system comprising a seal member and a sliding member that moves relatively to the seal member and contacts the seal member via a lubricating oil, wherein the seal member contains an inorganic filler, and wherein at least one of the seal member and the lubricating oil contains an ashless friction modifier.

## Description

### Technical Field

The present invention relates to an oil/seal lubrication system.

### Background Art

Lubricating oil is used to improve the lubricity of sliding members in mechanical elements such as hydraulic machinery, compression machinery, turbines, gear elements, and bearings in automobiles, industrial machinery, and the like, and seal members (oil seals) are provided to prevent the lubricating oil from leaking from the mechanical elements.

Sliding members such as rotating shafts and hydraulic cylinders contact and slide on seal members. Therefore, there is a demand for seal members that have high sealing performance against such sliding members and are reduced in friction so that sliding resistance is reduced. For example, Patent Literature 1 discloses a fluororubber composition that is suitably used as a seal material that makes it possible to achieve low friction while maintaining sealing performance by increasing the oil pump amount from the initial use of an oil seal to after wear, the fluororubber composition containing, per 100 parts by weight of fluororubber, 1 to 100 parts by weight of a needle-shaped filler or fibrous filler having an average particle diameter of 5 µm or less, an average particle length of 40 to 60 µm, and an aspect ratio of 10 to 12.

### Citation List

### Patent Literature

[Patent Literature 1] International Publication No. WO 2014/024661

### Summary of Invention

### Technical Problem

One aspect of the present invention aims to provide an oil/seal lubrication system that enables friction reduction between a seal member and a sliding member that moves relatively to the seal member and contacts the seal member via a lubricating oil.

### Solution to Problem

According to studies by the present inventors, it has been found that friction reduction can be achieved by incorporating an inorganic filler in a seal member and incorporating an ashless friction modifier in at least one of the seal member and lubricating oil.

The present invention includes the following aspects.
[1] An oil/seal lubrication system comprising a seal member and a sliding member that moves relatively to the seal member and contacts the seal member via a lubricating oil, wherein the seal member contains an inorganic filler, and wherein at least one of the seal member and the lubricating oil contains an ashless friction modifier.
[2] The oil/seal lubrication system according to [1], wherein both the seal member and the lubricating oil contain the ashless friction modifier.
[3] The oil/seal lubrication system according to [1] or [2], wherein the inorganic filler is at least one selected from the group consisting of carbon black, metal oxides, metal hydroxides, and silicate minerals.
[4] The oil/seal lubrication system according to any one of [1] to [3], wherein the ashless friction modifier is at least one selected from the group consisting of fatty acid ester compounds, phosphorus compounds, ether compounds, alcohol compounds, amide compounds, amine compounds, imide compounds, sulfur compounds, and phosphorus-sulfur compounds.
[5] The oil/seal lubrication system according to any one of [2] to [4], wherein the friction modifier in the seal member and the friction modifier in the lubricating oil are fatty acid ester compounds.
[6] The oil/seal lubrication system according to [5], wherein the fatty acid ester compound contains a compound having a hydrocarbon group, an ester group, and a hydroxyl group.
[7] The oil/seal lubrication system according to any one of [1] to [6], wherein the lubricating oil contains at least one base oil selected from the group consisting of base oils classified into any of Group I, Group II, Group III, Group IV, and Group V of the API base oil classification.
[8] The oil/seal lubrication system according to any one of [1] to [7], wherein the lubricating oil contains a base oil having a viscosity index of 80 or more.
[9] The oil/seal lubrication system according to any one of [1] to [8], wherein the lubricating oil contains a base oil having %Cp of 60 or more and %C_{A} of 5 or less.
[10] The oil/seal lubrication system according to any one of [1] to [8], wherein the lubricating oil contains an oxygen-containing base oil.
[11] The oil/seal lubrication system according to any one of [1] to [10], wherein a coefficient of friction measured with an MTM tester using the seal member and the lubricating oil is 0.050 or less.

### Advantageous Effects of Invention

According to one aspect of the present invention, it is possible to provide an oil/seal lubrication system that enables friction reduction between a seal member and a sliding portion that moves relatively to the seal member and contacts the seal member via a lubricating oil.

### Brief Description of Drawings

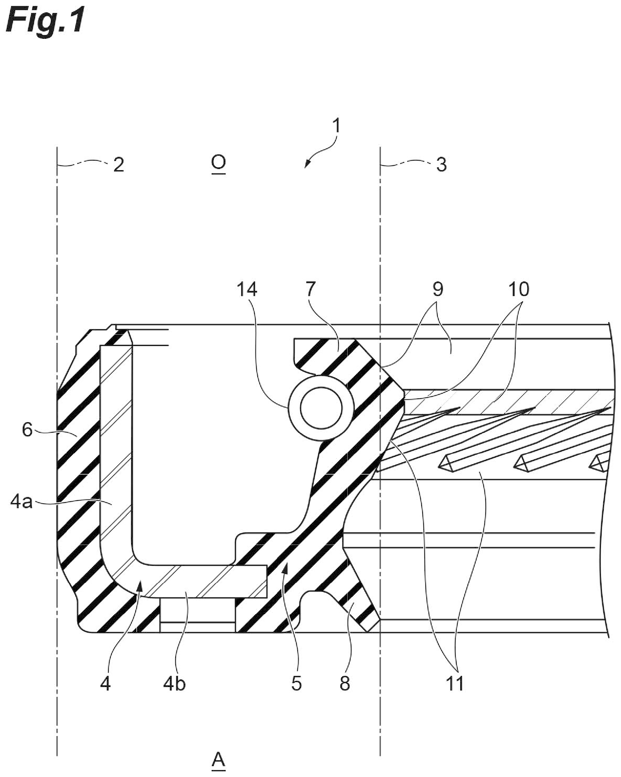

[FIG. 1] FIG. 1 is a schematic diagram showing one embodiment of an oil/seal lubrication system.

### Description of Embodiments

Hereinafter, embodiments of the present invention will be described with appropriate reference to the drawings. FIG. 1 is a schematic cross-sectional view showing one embodiment of an oil/seal lubrication system.

As shown in FIG. 1, an oil/seal lubrication system 1 according to one embodiment is mounted in an annular gap between a housing 2 and a rotating shaft (sliding member) 3, which are two members assembled concentrically and relatively rotatably to each other, and seals the annular gap. This prevents leakage of a sealing target such as lubricating oil existing on the sealing target side O.

The oil/seal lubrication system 1 has an annular seal member 5 fitted to the inner peripheral surface of a shaft hole provided in the housing 2, and a reinforcing ring 4 that imparts fitting rigidity to the seal member 5. The reinforcing ring 4 is an annular member made of metal having an L-shaped cross section, having a cylindrical portion 4a provided along the inner peripheral surface of the shaft hole and an inward flange portion 4b extending radially inward from an end portion of the cylindrical portion 4a on the atmosphere side A. The seal member 5 is made of a rubber-like elastic body integrally baked and fixed from the outer peripheral surface of the cylindrical portion 4a of the reinforcing ring 4 to the end surface on the atmosphere side A and the end surface on the sealing target side O of the inward flange portion 4b.

An outer peripheral seal portion 6 of the seal member 5 fixed to the outer peripheral surface of the cylindrical portion 4a of the reinforcing ring 4 has a predetermined interference with the inner peripheral surface of the shaft hole of the housing 2. The outer peripheral seal portion 6 receives fitting rigidity from the cylindrical portion 4a of the reinforcing ring 4 and is firmly fixed to the inner peripheral surface of the shaft hole, and prevents leakage of the sealing target from the inner peripheral surface of the shaft hole. In another embodiment, a configuration (metal fitting type) in which the cylindrical portion 4a of the reinforcing ring 4 is directly fitted to the inner peripheral surface of the shaft hole without providing the outer peripheral seal portion 6 can be adopted.

On the rotating shaft 3 side of the seal member 5, a seal lip 7 extending in the inner diameter direction from the inner end of the inward flange portion 4b of the reinforcing ring 4 toward the sealing target side O, and a dust lip 8 that conversely extends in the inner diameter direction toward the atmosphere side A are provided. The dust lip 8 has a plate-like cross section, and the tip of the dust lip 8 is configured to slidably and sealingly contact the peripheral surface of the rotating shaft 3. This prevents intrusion of dust from the atmosphere side A.

The seal lip 7 has a sealing target side inclined surface 9 facing the sealing target side O, an atmosphere side inclined surface 11 facing the atmosphere side A, and a sliding surface 10 disposed between the sealing target side inclined surface 9 and the atmosphere side inclined surface 11. The sealing target side inclined surface 9 of the seal lip 7 is inclined from the edge of the sliding surface 10 on the sealing target side O toward the sealing target side O so as to gradually widen the gap with the peripheral surface of the rotating shaft 3. The atmosphere side inclined surface 11 of the seal lip 7 is inclined from the edge of the sliding surface 10 on the atmosphere side A toward the atmosphere side A so as to gradually widen the gap with the peripheral surface of the rotating shaft 3.

Between the sealing target side inclined surface 9 and the atmosphere side inclined surface 11, the sliding surface 10 is provided along the peripheral surface of the rotating shaft 3. That is, the lip tip portion of the seal lip 7 is formed by continuously forming the sealing target side inclined surface 9, the sliding surface 10, and the atmosphere side inclined surface 11 from the sealing target side O to the atmosphere side A, and constitutes a flat-type sliding portion having a substantially trapezoidal cross section.

The lip tip portion of the seal lip 7 has a predetermined interference with the peripheral surface of the rotating shaft 3. Further, a garter spring 14 that imparts a tightening force to the lip tip portion of the seal lip 7 toward the rotating shaft 3 is mounted at a position on the outer peripheral side of the seal lip 7 and on the back surface of the sliding surface 10. Therefore, when the oil/seal lubrication system 1 is mounted on the rotating shaft 3, the seal lip 7 undergoes elastic deformation so as to expand in diameter, and slidably and sealingly contacts the peripheral surface of the rotating shaft 3 by its elastic restoring force.

A hard material is suitably used for the rotating shaft 3. Examples of the hard material include carbon steel, low alloy steel, stainless steel, or a material obtained by surface-coating these. The hardness of the hard material may be 10 HRC or more, 20 HRC or more, or 30 HRC or more, and is preferably 40 HRC or more or 50 HRC or more under usage conditions where wear is likely to occur. The surface roughness of the peripheral surface of the rotating shaft 3 (the portion in contact with the seal member 5) may be 1 µmRa or less, 0.6 µmRa or less, or 0.5 µmRa or less, and is preferably 10 µmRz or less, 6 µmRz or less, or 4 µmRz or less.

The oil/seal lubrication system 1 described above is suitably applied to rotating shafts of mechanical elements such as various industrial machines such as automobiles, electric vehicles, motorcycles, bicycles, aircraft, railway vehicles, construction machines, agricultural machines, hydraulic machines, compression machines, robots, turbines, semiconductor manufacturing equipment, information electronic equipment, OA equipment, household electrical appliances, drones, gear elements, and bearings. The higher the speed of rotation of the rotating shaft, the more the durability of the seal member, lubricating oil, and rotating shaft increases with energy saving and heat generation suppression due to friction reduction, so the oil/seal lubrication system 1 according to the present embodiment is particularly preferably applied to such high-speed rotating shafts. In the present embodiment, application to a rotating shaft has been described as an example, but in another embodiment, the oil/seal lubrication system can also be applied to shock absorbers, hydraulic cylinders, and the like of the above mechanical elements.

The oil/seal lubrication system 1 is suitably used in electric vehicles (EVs). The oil/seal lubrication system 1 is particularly suitably used in the motor drive portion of an EV drive device (e-axle), and in this case, torque can be suppressed and wear of the seal member 5 can be reduced, enabling a longer service life. Further, the oil/seal lubrication system 1 is also suitably used in robots in which rotation is slower than automobile engines and reversal of rotation occurs frequently.

The seal member 5 contains an inorganic filler. The shape of the inorganic filler may be, for example, particulate, fibrous, layered, massive, strip-like, columnar, or the like.

As the inorganic filler, for example, at least one selected from the group consisting of carbon black, metal oxides, metal hydroxides, and silicate minerals can be used. Examples of the metal oxides include iron(III) oxide (Fe₂O₃), chromium(III) oxide (Cr₂O₃), titanium dioxide (TiO₂), aluminum oxide (Al₂O₃), magnesium oxide (MgO), zinc oxide (ZnO), and the like. Examples of the metal hydroxides include magnesium hydroxide, aluminum hydroxide, and the like. Examples of the silicate minerals include silica, wollastonite, talc, mica, and the like. Among these, from the viewpoint of availability and adsorptivity with the ashless friction modifier, metal oxides, metal hydroxides, or silicate minerals are preferred, iron(III) oxide, chromium(III) oxide, titanium dioxide, aluminum hydroxide, silica, wollastonite, or talc is preferred, iron(III) oxide, chromium(III) oxide, titanium dioxide, aluminum hydroxide, or wollastonite is more preferred, and iron(III) oxide, chromium(III) oxide, titanium dioxide, or aluminum hydroxide is still more preferred. As the inorganic filler, an iron-based filler is preferred from the viewpoint that the effect of friction reduction by the friction modifier described later is particularly remarkably obtained, and a filler containing iron(III) oxide is more preferred.

The content of the inorganic filler is preferably 10 parts by mass or more, more preferably 20 parts by mass or more, still more preferably 30 parts by mass or more, particularly preferably 50 parts by mass or more, and is preferably 300 parts by mass or less, more preferably 250 parts by mass or less, still more preferably 200 parts by mass or less, particularly preferably 150 parts by mass or less, relative to 100 parts by mass of the rubber component in the seal member 5.

In one embodiment, the seal member 5 may be a vulcanized molded product (also called a crosslinked molded product) of a rubber composition containing a rubber component and an inorganic filler. In other words, the seal member may further contain a rubber component (vulcanized (crosslinked) rubber) in addition to the inorganic filler. The seal member 5 is obtained by molding a rubber composition by subjecting the rubber composition to, for example, heat pressing (primary vulcanization) at 160 to 200°C for 3 to 30 minutes, and if necessary, secondary vulcanization at 150 to 250°C for 0.5 to 24 hours.

The type of rubber component is not particularly limited. Examples of the rubber component include natural rubber, styrenebutadiene rubber, butadiene rubber, chloroprene rubber, acrylonitrile-butadiene rubber (nitrile rubber, NBR), hydrogenated nitrile rubber, isoprene rubber, butyl rubber, ethylene-propylene rubber, ethylene-propylene-diene rubber (EPDM), acrylic rubber (ACM), fluororubber (FKM), silicone rubber, and the like. The rubber component is preferably at least one selected from the group consisting of fluororubber (FKM), acrylonitrile-butadiene rubber (nitrile rubber, NBR), silicone rubber, and acrylic rubber (ACM).

Examples of fluororubber include polyol-vulcanizable fluororubber and peroxide-crosslinkable fluororubber. The fluororubber is preferably a polyol-vulcanizable fluororubber.

Examples of polyol-vulcanizable fluororubber include homopolymers, copolymers (e.g., alternating copolymers) of fluorine-containing monomers such as vinylidene fluoride, hexafluoropropene, pentafluoropropene, trifluoroethylene, trifluorochloroethylene, tetrafluoroethylene, vinyl fluoride, perfluoroacrylic acid ester, perfluoroalkyl acrylate, perfluoro(methyl vinyl ether), perfluoro(ethyl vinyl ether), perfluoro(propyl vinyl ether), or copolymers of these fluorine-containing monomers with propylene. The polyol-vulcanizable fluororubber is preferably a vinylidene fluoride-hexafluoropropene copolymer, a vinylidene fluoride-hexafluoropropene-tetrafluoroethylene copolymer, and a tetrafluoroethylene-propylene copolymer. Commercially available polyol-vulcanizable fluororubber may be used as is.

Examples of peroxide-crosslinkable fluororubber include fluorine-containing elastomers containing iodine and/or bromine in the molecule as crosslinking sites. The fluorine content in the peroxide-crosslinkable fluororubber may be 63 to 71% by weight. The Mooney viscosity ML₁₊₁₀ (121°C) of the peroxide-crosslinkable fluororubber may be 20 to 100.

Introduction of iodine groups and/or bromine groups that enable peroxide crosslinking of fluororubber can be performed by copolymerization reaction in the presence of saturated or unsaturated compounds containing iodine groups and/or bromine groups.

When bromine groups and/or iodine groups are to be contained in the side chain of fluororubber, for example, crosslinking point-forming monomers such as perfluoro(2-bromoethyl vinyl ether), 3,3,4,4-tetrafluoro-4-bromo-1-butene, 2-bromo-1,1-difluoroethylene, bromotrifluoroethylene, perfluoro(2-iodoethyl vinyl ether), and iodotrifluoroethylene can be copolymerized with the above fluorine-containing monomers.

When iodine groups and/or bromine groups are to be contained at the terminal of fluororubber, terminal halogenated fluoroalkylene compounds represented by the formula: X¹CₙF₂ₙX² (X¹: F, Br or I, X²: Br or I, n: an integer of 1 to 12) are used. As the terminal halogenated fluoroalkylene compound, a compound in which n is 1 to 6 is preferred from the viewpoint of balance between reactivity and handling. Specifically, copolymers containing iodine groups and/or bromine groups are preferably used by copolymerizing terminal halogenated fluoroalkylene compounds such as 1-bromoperfluoroethane, 1-bromoperfluoropropane, 1-bromoperfluorobutane, 1-bromoperfluoropentane, 1-bromoperfluorohexane, 1-iodoperfluoroethane, 1-iodoperfluoropropane, 1-iodoperfluorobutane, 1-iodoperfluoropentane, and 1-iodoperfluorohexane with the above fluorine-containing monomers.

When X¹ and X² are each I or Br, crosslinking points are introduced at the terminal of the fluororubber. Examples of compounds in which X¹ and X² are each I or Br include 1-bromo-2-iodotetrafluoroethane, 1-bromo-3-iodoperfluoropropane, 1-bromo-4-iodoperfluorobutane, 2-bromo-3-iodoperfluorobutane, monobromomonoiodoperfluoropentane, monobromomonoiodoperfluoro-n-hexane, 1,2-dibromoperfluoroethane, 1,3-dibromoperfluoropropane, 1,4-dibromoperfluorobutane, 1,5-dibromoperfluoropentane, 1,6-dibromoperfluorohexane, 1,2-diiodoperfluoroethane, 1,3-diiodoperfluoropropane, 1,4-diiodoperfluorobutane, 1,5-diiodoperfluoropentane, 1,6-diiodoperfluorohexane, and the like.

The peroxide-crosslinkable fluororubber is preferably a copolymer elastomer as follows.
· Fluororubber in which iodine groups and/or bromine groups are introduced into a copolymer elastomer having a copolymer composition of about 50 to 80 mol% vinylidene fluoride, about 15 to 50 mol% hexafluoropropene, and about 30 to 0 mol% tetrafluoroethylene As such fluororubber, commercially available products such as Viton GAL200S, GBL200S, GBL600S, GF200S, GF600S manufactured by DuPont; Tecnoflon P457, P757, P459, P952 manufactured by Solvay Solexis; Daiel G952, G901, G902, G912, and G801 manufactured by Daikin can be used.
· Fluororubber in which iodine groups and/or bromine groups are introduced into a copolymer elastomer having a copolymer composition of about 50 to 85 mol% vinylidene fluoride, about 5 to 50 mol% perfluorovinyl ether represented by the formula: CF₂=CFORf (Rf: a perfluoroalkyl group having 1 to 10 carbon atoms (preferably a perfluoromethyl group) or a perfluorooxyalkyl group having 1 to 10 carbon atoms and having one or more ether bonds in the carbon chain), and about 50 to 0 mol% tetrafluoroethylene
As such fluororubber, commercially available products such as Viton GLT200S, GLT600S, GBLT200S, GBLT600S, GFLT200S, GFLT600S manufactured by DuPont; Tecnoflon PL455, PL855, PL557, PL458, PL958 manufactured by Solvay Solexis; Daiel LT302, and LT301 manufactured by Daikin can be used.

The rubber composition may further contain a vulcanizing agent (crosslinking agent). Examples of the vulcanizing agent (crosslinking agent) include polyols, organic peroxides, and the like. When the fluororubber is a polyol-vulcanizable fluororubber, a polyol is preferably used. When the fluororubber is a peroxide-crosslinkable fluororubber, an organic peroxide is preferably used.

Examples of polyols include 2,2-bis(4-hydroxyphenyl)propane [bisphenol A], 2,2-bis(4-hydroxyphenyl)perfluoropropane [bisphenol AF], bis(4-hydroxyphenyl)sulfone [bisphenol S], 2,2-bis(4-hydroxyphenyl)methane [bisphenol F], bisphenol A-bis(diphenyl phosphate), 4,4'-dihydroxydiphenyl, 2,2-bis(4-hydroxyphenyl)butane, and the like. The polyol is preferably bisphenol A or bisphenol AF. These polyols may be in the form of alkali metal salts or alkaline earth metal salts.

The content of the polyol may be 2 parts by mass or more, preferably 2.5 parts by mass or more, and may be 20 parts by mass or less, preferably 15 parts by mass or less, relative to 100 parts by mass of the polyol-vulcanizable fluororubber.

The polyol may be used in combination with a vulcanization accelerator. That is, the rubber composition may further contain a vulcanization accelerator. The vulcanization accelerator may be a quaternary onium salt which is a quaternary phosphonium salt or a quaternary ammonium salt, and is preferably a quaternary phosphonium salt. The content of the quaternary onium salt may be 0.5 parts by mass or more, preferably 1 part by mass or more, and may be 10 parts by mass or less, preferably 5 parts by mass or less, relative to 100 parts by mass of the polyol-vulcanizable fluororubber.

The quaternary phosphonium salt is a compound represented by the formula: [PR¹R²R³R⁴]⁺X⁻.
In the formula, R¹ to R⁴ are each independently an alkyl group, alkoxyl group, aryl group, alkylaryl group, aralkyl group, or polyoxyalkylene group having 1 to 25 carbon atoms, and X⁻ is Cl⁻, Br, I⁻, HSO₄⁻, H₂PO₄⁻, RCOO⁻, ROSO₂⁻, or CO₃²⁻. Two to three of R¹ to R⁴ may form a ring structure together with P.

Examples of quaternary phosphonium salts include tetraphenylphosphonium chloride, benzyltriphenylphosphonium bromide, benzyltriphenylphosphonium chloride, triphenylmethoxymethylphosphonium chloride, triphenylmethylcarbonylmethylphosphonium chloride, triphenylethoxycarbonylmethylphosphonium chloride, trioctylbenzylphosphonium chloride, trioctylmethylphosphonium chloride, trioctylethylphosphonium acetate, tetraoctylphosphonium chloride, trioctylethylphosphonium dimethyl phosphate, and the like. The quaternary phosphonium salt may be an equimolar molecular compound of a polyhydroxy aromatic compound and a quaternary phosphonium compound as described in Japanese Unexamined Patent Publication No. S61-12741.

The quaternary ammonium salt is a compound represented by the formula: [NR¹R²R³R⁴]⁺X⁻. In the formula, R¹ to R⁴ and X⁻ have the same meanings as R¹ to R⁴ and X⁻ in the above quaternary phosphonium salt. Examples of quaternary ammonium salts include 1-alkylpyridinium salts, 5-aralkyl-1,5-diazabicyclo[4,3,0]-5-nonenium salts, 8-aralkyl-1,8-diazabicyclo[5,4,0]-7-undecenium salts, and the like.

Examples of organic peroxides include dicumyl peroxide, cumene hydroperoxide, p-methane hydroperoxide, 2,5-dimethylhexane-2,5-dihydroperoxide, di-tert-butyl peroxide, benzoyl peroxide, m-toluyl peroxide, 2,5-dimethyl-2,5-di(tert-butylperoxy)hexane, 2,5-dimethyl-2,5-di(tert-butylperoxy)hexyne-3, 1,3-di(tert-butylperoxyisopropyl)benzene, 2,5-dimethyl-2,5-dibenzoylperoxyhexane, (1,1,3,3-tetramethylbutylperoxy)2-ethylhexanoate, tert-butylperoxybenzoate, tert-butylperoxylaurate, di(tert-butylperoxy)adipate, di(2-ethoxyethylperoxy)dicarbonate, bis-(4-tert-butylcyclohexylperoxy)dicarbonate, and the like.

The content of the organic peroxide may be 0.5 parts by mass or more, preferably 1 part by mass or more, and may be 10 parts by mass or less, preferably 5 parts by mass or less, relative to 100 parts by mass of the peroxide-crosslinkable fluororubber.

The organic peroxide is preferably used in combination with a polyfunctional unsaturated compound from the viewpoint of improving the mechanical strength, compression set, and the like of the seal member. Examples of polyfunctional unsaturated compounds include tri(meth)allyl isocyanurate, tri(meth)allyl cyanurate, triallyl trimellitate, N,N'-m-phenylenebismaleimide, diallyl phthalate, tris(diallylamino)-s-triazine, triallyl phosphite, ethylene glycol di(meth)acrylate, diethylene glycol di(meth)acrylate, neopentyl glycol di(meth)acrylate, trimethylolpropane tri(meth)acrylate, 1,3-polybutadiene, and the like. Here, (meth)allyl means allyl or methallyl. (Meth)acrylate means acrylate or methacrylate.

The content of the polyfunctional unsaturated compound may be 0.1 parts by mass or more, preferably 0.5 parts by mass or more, and may be 20 parts by mass or less, preferably 10 parts by mass or less, relative to 100 parts by mass of the peroxide-crosslinkable fluororubber.

The seal member 5 may further contain other components. Examples of other components include ashless friction modifiers (details will be described later) and reinforcing agents.

The rubber composition is obtained by kneading the above-mentioned components using a kneader, an open roll, or the like. The seal member is obtained by forming the obtained rubber composition into a ribbon-shaped or pellet-shaped preformed product using an extruder or the like as necessary, and then appropriately performing molding and vulcanization. When the seal member contains an inorganic filler and an ashless friction modifier, the ashless friction modifier and the inorganic filler may be added separately to the rubber component, or after performing a treatment to adsorb the ashless friction modifier on the surface of the inorganic filler in advance, the treated inorganic filler may be added to the rubber component.

The lubricating oil is present on the sealing target side O of the oil/seal lubrication system 1, and is also present between the peripheral surface of the rotating shaft 3 and the sliding surface 10 of the lip tip portion of the seal lip 7 in the seal member 5. The rotating shaft 3 contacts the seal member 5 (the sliding surface 10 of the lip tip portion of the seal lip 7) via the lubricating oil and moves relatively to the seal member 5.

The lubricating oil contains a base oil. Examples of base oils include hydrocarbon oils and oxygen-containing oils. Examples of hydrocarbon oils include mineral oils, alkylbenzenes, alkylnaphthalenes, poly-α-olefins, polybutenes, and ethylene-α-olefin copolymers. Examples of oxygen-containing oils include esters and ethers. Examples of esters include polyol esters and complex esters. Examples of ethers include polyalkylene glycols and polyvinyl ethers, diphenyl ethers, dimethylsiloxanes, perfluoropolyethers, and the like.

The hydrocarbon oil is preferably a mineral oil or an isoparaffin. Mineral oil includes, for example, paraffinic mineral oils (normal paraffins, isoparaffins, etc.), naphthenic mineral oils, aromatic mineral oils, etc., obtained by refining a lubricating oil fraction obtained by atmospheric distillation and/or vacuum distillation of crude oil by appropriately combining one or more refining treatments such as solvent deasphalting, solvent extraction, hydrocracking, solvent dewaxing, catalytic dewaxing, hydrorefining, sulfuric acid washing, and clay treatment, alone or in combination. Isoparaffin may contain isoparaffin obtained by hydrocracking and/or hydroisomerization of a paraffin wax component obtained in the dewaxing step or Fischer-Tropsch synthesis as a main component.

The oxygen-containing oil is preferably a polyol ester. The polyol ester is an ester of a polyhydric alcohol and a carboxylic acid, and may preferably be an ester of a polyhydric alcohol and a fatty acid.

The polyhydric alcohol constituting the polyol ester may be a polyhydric alcohol having 2 to 6 hydroxyl groups. The number of carbon atoms in the polyhydric alcohol may be 4 to 12. Examples of polyhydric alcohols include hindered alcohols such as neopentyl glycol, trimethylolethane, trimethylolpropane, trimethylolbutane, di-(trimethylolpropane), tri-(trimethylolpropane), pentaerythritol, and dipentaerythritol. The polyhydric alcohol is preferably at least one selected from the group consisting of trimethylolpropane, pentaerythritol, and dipentaerythritol.

The fatty acid constituting the polyol ester may be a saturated fatty acid or may be an unsaturated fatty acid. In one embodiment, when the polyhydric alcohol is trimethylolpropane, the fatty acid preferably contains an unsaturated fatty acid. In another embodiment, when the polyhydric alcohol is pentaerythritol or dipentaerythritol, the fatty acid preferably contains a saturated fatty acid.

The number of carbon atoms in the unsaturated fatty acid may be 14 or more and may be 20 or less. Examples of unsaturated fatty acids include physeteric acid, myristoleic acid, palmitoleic acid, heptadecenoic acid, petroselaidic acid, elaidic acid, oleic acid, and vaccenic acid. The unsaturated fatty acid preferably contains oleic acid.

The number of carbon atoms in the saturated fatty acid may be preferably 4 or more, and may be preferably 20 or less, more preferably 18 or less, still more preferably 9 or less. Examples of saturated fatty acids include butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, and icosanoic acid. These saturated fatty acids may be linear or branched.

In one embodiment, the complex ester may be a complex ester of a polyhydric alcohol, a polyvalent carboxylic acid, and at least one selected from the group consisting of a monovalent carboxylic acid and a monovalent alcohol. Examples of the polyhydric alcohol constituting the complex ester may be the same as the examples of the polyhydric alcohol constituting the polyol ester described above. The polyvalent carboxylic acid constituting the complex ester may be a divalent carboxylic acid. The number of carbon atoms in the divalent carboxylic acid may be 2 or more, preferably 4 or more, and may be 12 or less, preferably 10 or less. Examples of polyvalent carboxylic acids include succinic acid, adipic acid, azelaic acid, sebacic acid, and the like.

The monovalent carboxylic acid constituting the complex ester may be a fatty acid. Examples of the fatty acid may be the same as the examples of the fatty acid constituting the polyol ester described above. The number of carbon atoms in the monovalent alcohol constituting the complex ester may be 2 or more, preferably 4 or more, and may be 20 or less, preferably 10 or less. Examples of monovalent alcohols include ethanol, butanol, hexanol, octanol, nonanol, decanol, and the like.

The base oil is classified into Group I (viscosity index of 80 or more and less than 120, sulfur content exceeding 0.03% by mass and/or saturated content less than 90% by mass; solvent refined base oil), Group II (viscosity index of 80 or more and less than 120, sulfur content of 0.03% by mass or less and saturated content of 90% by mass or more: hydrorefined base oil), Group III (viscosity index of 120 or more, sulfur content of 0.03% by mass or less and saturated content of 90% by mass or more: hydrocracked/hydroisomerized oil), Group IV (poly-α-olefin base oil), and Group V (base oil not belonging to any of Groups I to IV) of the API base oil classification.

The base oil may contain as a main component at least one selected from the group consisting of base oils classified into any of these groups. The group may preferably be a group consisting of base oils classified into any of Group II, Group III, Group IV, and Group V, may be a group consisting of base oils classified into any of Group III, Group IV, and Group V, and may be a group consisting of base oils classified into Group III or Group IV.

As these base oils, a base oil having a saturated content of 90% by mass or more, preferably 94% by mass or more, 97% by mass or more, or 99% by mass or more, and an aromatic content of 10% by mass or less, preferably 6% by mass or less, 3% by mass or less, or 1% by mass or less may be used as a main component, and a base oil having %C_{P} of 60 or more, 70 or more, 75 or more, or 80 or more, %C_{N} of 40 or less, 30 or less, or 25 or less, and %C_{A} of 5 or less, 3 or less, 1 or less, or 0.1 or less may be used as a main component. Here, %C_{P}, %C_{N}, and %C_{A} (total 100) mean the weight ratios of paraffinic carbon content, naphthenic carbon content, and aromatic carbon content, respectively, to the total carbon content (determined in accordance with ASTM D 3238). The viscosity index of these base oils is preferably 80 or more, and may be 90 or more, 100 or more, 120 or more, 130 or more, 140 or more, or 150 or more. Examples of base oils classified into Group V include aromatic hydrocarbon base oils such as alkylbenzenes and alkylnaphthalenes, oxygen-containing base oils such as esters and ethers, and the like, with ester-based base oils or ether-based base oils being preferred. The viscosity index of at least one oxygen-containing base oil selected from ester-based base oils and ether-based base oils is preferably 50 or more, 80 or more, and may be 90 or more, 100 or more, 120 or more, 130 or more, 140 or more, or 150 or more.

The kinematic viscosity of the base oil at 40°C may be 3 mm²/s or more, 4 mm²/s or more, or 5 mm²/s or more, and may be 500 mm²/s or less, 300 mm²/s or less, or 100 mm²/s or less. The kinematic viscosity of the base oil at 100°C may be 1 mm²/s or more or 2 mm²/s or more, and may be 100 mm²/s or less or 50 mm²/s or less. The kinematic viscosity in this specification means the kinematic viscosity measured in accordance with JIS K 2283:2000.

The content of the base oil may be 50% by mass or more, 60% by mass or more, 70% by mass or more, 80% by mass or more, or 90% by mass or more, based on the total amount of the lubricating oil.

The lubricating oil may contain only the base oil, or may further contain additives in addition to the base oil. Examples of additives include ashless friction modifiers (details will be described later), antiwear agents, extreme pressure agents, metallic friction modifiers, antioxidants, acid scavengers, metal deactivators, viscosity index improvers, pour point depressants, detergent dispersants, antifoaming agents, and thickeners.

The total content of the additives may be 0.1% by mass or more, 0.5% by mass or more, or 1% by mass or more, and may be 40% by mass or less, 20% by mass or less, 10% by mass or less, or 5% by mass or less, based on the total amount of the lubricating oil.

In the oil/seal lubrication system as described above, at least one of the seal member and the lubricating oil contains an ashless friction modifier. That is, in one embodiment, the seal member contains an ashless friction modifier, and the lubricating oil may not contain an ashless friction modifier. In another embodiment, the lubricating oil contains an ashless friction modifier, and the seal member may not contain an ashless friction modifier. In another embodiment, both the seal member and the lubricating oil may contain an ashless friction modifier. From the viewpoint that the effect of friction reduction is particularly remarkably obtained, it is preferable that both the seal member and the lubricating oil contain an ashless friction modifier. When both the seal member and the lubricating oil contain an ashless friction modifier, the ashless friction modifier in the seal member and the ashless friction modifier in the lubricating oil may be the same as each other or may be different from each other.

The ashless friction modifier may be, for example, at least one selected from the group consisting of fatty acid ester compounds, phosphorus compounds, ether compounds, alcohol compounds, amide compounds, amine compounds, imide compounds, sulfur compounds, and phosphorus-sulfur compounds. The ashless friction modifier is preferably at least one selected from the group consisting of fatty acid ester compounds, phosphorus compounds, amide compounds, amine compounds, imide compounds, sulfur compounds, and phosphorus-sulfur compounds from the viewpoint that further friction reduction becomes possible. These friction modifiers may be compounds having a hydrocarbon group and a polar group. Examples of hydrocarbon groups include chain hydrocarbon groups, aromatic hydrocarbon groups, alicyclic hydrocarbon groups, and the like. The number of carbon atoms in the hydrocarbon group may be 2 or more, and may be 400 or less, 200 or less, or 40 or less. The hydrocarbon group may be a saturated hydrocarbon group or may be an unsaturated hydrocarbon group. Examples of polar groups include ester groups, carboxy groups, amine groups, amide groups, imide groups, phosphate groups, and the like. These polar groups can be adsorbed on the surface of the inorganic filler.

When both the seal member and the lubricating oil contain an ashless friction modifier, the combination of the ashless friction modifier in the seal member and the ashless friction modifier in the lubricating oil may be combinations C1 to C81 shown in Table 1 below.

**[Table 1]**

| | | Ashless friction modifier in lubricating oil | | | | | | | | |
|---|---|---|---|---|---|---|---|---|---|---|
| | | Fatty acid ester | Phosphorus | Ether | Alcohol | Amide | Amine | Imide | Sulfur | Phosphorus-sulfur |
| | Fatty acid ester | C1 | C2 | C3 | C4 | C5 | C6 | C7 | C8 | C9 |
| | Phosphorus | C10 | C11 | C12 | C13 | C14 | C15 | C16 | C17 | C18 |
| | Ether | C19 | C20 | C21 | C22 | C23 | C24 | C25 | C26 | C27 |
| Ashless friction modifier in seal member | Alcohol | C28 | C29 | C30 | C31 | C32 | C33 | C34 | C35 | C36 |
| | Amide | C37 | C38 | C39 | C40 | C41 | C42 | C43 | C44 | *C45* |
| | Amine | C46 | C47 | C48 | C49 | C50 | C51 | C52 | C53 | C54 |
| | Imide | C55 | C56 | C57 | C58 | C59 | C60 | C61 | C62 | C63 |
| | Sulfur | C64 | C65 | C66 | C67 | C68 | C69 | C70 | C71 | C72 |
| | Phosphorus-sulfur | C73 | C74 | C75 | C76 | C77 | C78 | C79 | C80 | C81 |

Among the above combinations, combinations in which at least one of the ashless friction modifier in the seal member and the ashless friction modifier in the lubricating oil is a fatty acid ester compound (C1 to C9, C10, C19, C28, C37, C46, C55, C64, C73) are preferred, and combinations in which both the ashless friction modifier in the seal member and the ashless friction modifier in the lubricating oil are fatty acid ester compounds (C1) are more preferred.

The fatty acid ester compound is at least one selected from esters of a fatty acid and a monovalent alcohol or a polyhydric alcohol, and is preferably an ester of a fatty acid and a polyhydric alcohol. The fatty acid ester compound has a hydrocarbon group derived from a fatty acid or an alcohol. The number of carbon atoms in the hydrocarbon group may be 2 or more, preferably 6 or more or 12 or more, and may be 40 or less, preferably 20 or less or 18 or less.

In one embodiment, the fatty acid ester compound may have the above hydrocarbon group, an ester group, and a hydroxyl group (that is, may be a partial ester of a fatty acid and a polyhydric alcohol). The fatty acid ester compound may contain 10% by mass or more of a partial ester of a fatty acid and a polyhydric alcohol, and may contain it as a main component (for example, 50% by mass or more, preferably 60% by mass or more, 70% by mass or more, 80% by mass or more, or 90% by mass or more, and 100% by mass or less).

The number of carbon atoms in the fatty acid constituting the fatty acid ester compound may be 2 or more, preferably 6 or more, and may be 30 or less, preferably 20 or less. The fatty acid more preferably may contain a saturated or unsaturated fatty acid having 12 to 18 carbon atoms, and may contain at least one selected from the group consisting of lauric acid, myristic acid, palmitic acid, stearic acid, and oleic acid.

The monovalent alcohol constituting the fatty acid ester compound may be an aliphatic alcohol. The number of carbon atoms in the aliphatic alcohol may be 2 or more, preferably 6 or more, and may be 30 or less, preferably 20 or less. The monovalent alcohol more preferably may contain a saturated or unsaturated aliphatic alcohol having 12 to 18 carbon atoms, and may contain at least one selected from the group consisting of lauryl alcohol, myristyl alcohol, palmityl alcohol, stearyl alcohol, and oleyl alcohol.

The polyhydric alcohol constituting the fatty acid ester compound may have 2 to 6 hydroxyl groups. The number of carbon atoms in the polyhydric alcohol may be 2 or more, preferably 3 or more, and may be 12 or less, preferably 6 or less. The polyhydric alcohol more preferably may contain a polyhydric alcohol having 3 to 6 carbon atoms and 2, 3, or 4 hydroxyl groups, and may contain at least one selected from the group consisting of glycerin, sorbitan, neopentyl glycol, trimethylolpropane, and pentaerythritol.

Specific examples of these fatty acid ester compounds include fatty acid monoesters having a hydrocarbon group with 12 to 18 carbon atoms, such as oleyl oleate and stearyl stearate. Other specific examples of fatty acid ester compounds include polyhydric alcohol fatty acid esters having a hydrocarbon group with 12 to 18 carbon atoms, such as glycerin fatty acid esters, sorbitan fatty acid esters, neopentyl glycol fatty acid esters, trimethylolpropane fatty acid esters, and pentaerythritol fatty acid esters. These polyhydric alcohol fatty acid esters may be partial esters, and more specifically, may be glycerin monooleate, sorbitan monooleate, trimethylolpropane decanoate (main components: monoester and diester), pentaerythritol oleate (main components: monoester, diester, and triester), and the like. Other specific examples of fatty acid ester compounds include polymethacrylic acid esters having a hydrocarbon group with 1 to 40 carbon atoms.

The phosphorus compound is a compound containing phosphorus as a constituent element (excluding compounds containing sulfur as a constituent element). Examples of phosphorus compounds include phosphorous acid esters, orthophosphoric acid esters, amine salts of acid phosphates, hydrogen phosphites, phosphonic acid esters, phosphinic acid esters, and the like. The phosphorus compound may have a hydrocarbon group. The number of carbon atoms in the hydrocarbon group in the phosphorus compound may be 1 or more, 6 or more, or 12 or more, and may be 30 or less, 20 or less, or 18 or less.

The phosphorus compound is preferably at least one selected from the group consisting of phosphorous acid esters, orthophosphoric acid esters, and amine salts of acid phosphates.

Examples of phosphorous acid esters include dialkyl hydrogen phosphites, dialkenyl hydrogen phosphites, diaryl hydrogen phosphites, trialkyl phosphites, trialkenyl phosphites, and triaryl phosphites. The phosphorous acid ester is preferably at least one selected from the group consisting of dialkenyl hydrogen phosphites and diaryl hydrogen phosphites.

Examples of alkyl groups in dialkyl hydrogen phosphites and trialkyl phosphites include butyl groups, pentyl groups, hexyl groups, heptyl groups, octyl groups, nonyl groups, decyl groups, undecyl groups, and didodecyl groups. Examples of alkenyl groups in dialkenyl hydrogen phosphites and trialkenyl phosphites include oleyl groups. Examples of aryl groups in diaryl hydrogen phosphites and triaryl phosphites include phenyl groups and cresyl groups.

Examples of orthophosphoric acid esters include trialkyl phosphates, trialkenyl phosphates, and triaryl phosphates. Examples of alkyl groups in trialkyl phosphates include butyl groups, pentyl groups, hexyl groups, heptyl groups, octyl groups, nonyl groups, decyl groups, undecyl groups, dodecyl groups, decyl groups, tetradecyl groups, pentadecyl groups, hexadecyl groups, heptadecyl groups, and octadecyl groups. Examples of alkenyl groups in trialkenyl phosphates include oleyl groups. Examples of aryl groups in triaryl phosphates include phenyl groups, cresyl groups, ethylphenyl groups, butylphenyl groups, and xylenyl groups. The orthophosphoric acid ester is preferably a triaryl phosphate, and more preferably tricresyl phosphate.

Examples of acid phosphates in amine salts of acid phosphates include monoalkyl acid phosphates, monoalkenyl acid phosphates, dialkyl acid phosphates, and dialkenyl acid phosphates.

Examples of alkyl groups in monoalkyl acid phosphates and dialkyl acid phosphates include butyl groups, pentyl groups, hexyl groups, heptyl groups, octyl groups, nonyl groups, decyl groups, undecyl groups, dodecyl groups, tridecyl groups, tetradecyl groups, pentadecyl groups, hexadecyl groups, heptadecyl groups, and octadecyl groups. Examples of alkenyl groups in monoalkenyl acid phosphates and dialkenyl acid phosphates include oleyl groups.

Examples of amines in amine salts of acid phosphates include monoalkylamines, dialkylamines, and trialkylamines. Examples of alkyl groups in these amines include methyl groups, ethyl groups, propyl groups, butyl groups, pentyl groups, hexyl groups, heptyl groups, and octyl groups.

The ether compound is a compound having a hydrocarbon group and an ether group. The number of carbon atoms in the hydrocarbon group may be 1 or more, 6 or more, or 12 or more, and may be 30 or less, 20 or less, or 18 or less. Examples of ether compounds include etherified products of polyhydric alcohols having a hydrocarbon group with 6 to 18 carbon atoms, such as glycerin oleyl ether, glycerin stearyl ether, glycerin 2-ethylhexyl ether, and glycerin hexyl ether, and etherified products of monovalent alcohols having a hydrocarbon group with 6 to 18 carbon atoms, such as dioctyl ether and diphenyl ether.

The alcohol compound is a compound having a hydrocarbon group and a hydroxyl group. The number of carbon atoms in the hydrocarbon group may be 1 or more, 6 or more, or 12 or more, and may be 30 or less, 20 or less, or 18 or less. Examples of alcohol compounds include alcohol compounds having a hydrocarbon group with 6 to 18 carbon atoms, such as oleyl alcohol, lauryl alcohol, decyl alcohol, stearyl alcohol, cyclohexyl alcohol, and phenol.

Examples of amide compounds include oleoyl sarcosine, fatty acid amides, fatty acid monoamides such as oleyl oleic acid monoamide and stearyl oleic acid monoamide, and fatty acid diamides such as ethylene bisstearic acid diamide and ethylene bisoleic acid diamide. The number of carbon atoms in the hydrocarbon group in the amide compound may be 1 or more, 6 or more, or 12 or more, and may be 30 or less, 20 or less, or 18 or less.

Examples of amine compounds include alkylamines, alkenylamines, alkylene oxide adducts thereof, alkanolamines, and the like. The alkylamine may be a monoalkylamine, a dialkylamine, or a trialkylamine. The alkenylamine may be a monoalkenylamine, a dialkenylamine, or a trialkenylamine.

The number of carbon atoms in the hydrocarbon group in the alkylamine or alkenylamine may be 1 or more, 6 or more, or 12 or more, and may be 30 or less, 20 or less, or 18 or less. Examples of alkylamines include stearylamine. Examples of alkenylamines include oleylamine and the like. Examples of alkanolamines include N,N-bis(2-hydroxyethyl)stearylamine, oleyldiethanolamine, and the like. Examples of alkylene oxide adducts include ethylene oxide adducts of alkyl or alkenyl amines.

Examples of imide compounds include alkyl or alkenyl succinimides and boron adducts thereof. Specific examples of these include succinimides having a hydrocarbon group with 30 or less carbon atoms, such as oleyl succinimide, and as well as polymeric poly(iso)butenyl succinimide, and boron adducts such as boric acid-modified products thereof. The number of carbon atoms in the hydrocarbon group in the imide compound may be 1 or more, 6 or more, or 12 or more, and may be 30 or less, 20 or less, or 18 or less. Further, the average number of carbon atoms in the poly(iso)butenyl group in the poly(iso)butenyl succinimide may be 40 or more, 60 or more, or 80 or more, and may be 400 or less, 200 or less, or 150 or less.

The sulfur compound is a compound containing sulfur as a constituent element (excluding compounds containing phosphorus as a constituent element). Examples of sulfur compounds include sulfurized olefins, sulfurized fats and oils, sulfurized esters, thiazoles, thiadiazoles, dithiocarbamates, and sulfides. The sulfur compound may have a hydrocarbon group. The number of carbon atoms in the hydrocarbon group in the sulfur compound may be 1 or more, 6 or more, and may be 30 or less, 20 or less, or 18 or less.

The sulfur compound is preferably a sulfide. The sulfide may be a monosulfide or may be a polysulfide. Examples of sulfides include dialkyl sulfides. The dialkyl sulfide is preferably a dialkyl polysulfide. The number of carbon atoms in the alkyl group in the dialkyl sulfide (dialkyl polysulfide) may be 1 or more, preferably 4 or more or 6 or more, and may be 12 or less, preferably 10 or less. The sulfur compound may be dithiocarbamates. Specific examples of these include dialkyldithiocarbamic acid esters. The number of carbon atoms in the alkyl group in the dialkyldithiocarbamates may be 1 or more, preferably 4 or more or 6 or more, and may be 12 or less, preferably 10 or less.

The phosphorus-sulfur compound is a compound containing phosphorus and sulfur as constituent elements. Examples of phosphorus-sulfur compounds include thiophosphoric acid esters or derivatives thereof having 1 to 3, preferably 1 or 2, sulfur atoms. The number of carbon atoms in the hydrocarbon group in the phosphorus-sulfur compound may be 1 or more, 4 or more, or 6 or more, and may be 30 or less, 20 or less, or 18 or less. Examples of phosphorus-sulfur compounds include thiophosphoric acid esters such as phosphorothionate and triphenyl phosphorothionate, and dialkyl dithiophosphoryl carboxylic acids or esters thereof, such as 3-diisobutoxyphosphinothioylsulfanyl-2-methylpropanoic acid or esters thereof.

The content of the friction modifier contained in the seal member 5 is preferably 0.01 parts by mass or more, more preferably 0.1 parts by mass or more, still more preferably 1 part by mass or more, and is preferably 20 parts by mass or less, more preferably 15 parts by mass or less, still more preferably 10 parts by mass or less, relative to 100 parts by mass of the rubber component in the seal member 5.

The content of the friction modifier contained in the lubricating oil may be 0.01% by mass or more, 0.05% by mass or more, or 0.1% by mass or more, and may be 10% by mass or less, 5% by mass or less, or 3% by mass or less, based on the total amount of the lubricating oil.

By using the seal member and lubricating oil described above, friction reduction becomes possible. For example, the coefficient of friction measured with an MTM tester using the seal member and lubricating oil may be 0.050 or less, 0.048 or less, 0.046 or less, 0.044 or less, 0.042 or less, or 0.040 or less. The coefficient of friction is measured by the method for measuring the coefficient of friction described in the Examples.

### Examples

Hereinafter, the present invention will be described more specifically based on Examples, but the present invention is not limited to the Examples.

### (Preparation of Seal Member S1)

FKM (fluororubber, Tecnoflon (registered trademark) P757 manufactured by Solvay) was used as the rubber component, and relative to 100 parts by mass of FKM, 75 parts by mass of iron(III) oxide (Brown #601 manufactured by Rezinocolor Industry Co., Ltd.) was used as an inorganic filler, and 5 parts by mass of glycerin monooleate was used as an ashless friction modifier. The prepared mixture was kneaded with a kneader and an open roll and then molded at 180°C for 6 minutes to prepare a seal member S1 of 40 × 40 × 2 mm.

### (Preparation of Seal Member S2)

A seal member S2 was prepared in the same manner as seal member S1, except that no friction modifier was used.

### (Preparation of Seal Member S3)

A seal member S3 was prepared in the same manner as seal member S2, except that wollastonite (Wollastonite 1250 manufactured by IMERYS) was used instead of iron(III) oxide.

### (Preparation of Seal Member S4)

A seal member S4 was prepared in the same manner as seal member S2, except that carbon black (acetylene black, "Denka Black" manufactured by Denka Co., Ltd.) was used instead of iron(III) oxide.

### (Preparation of Seal Member S5)

A seal member S5 was prepared in the same manner as seal member S1, except that iron(III) oxide and glycerin monooleate were not added.

### (Lubricating Oil L1)

Lubricating oil L1 was prepared by mixing 99% by mass of a base oil (Group III mineral oil, kinematic viscosity at 40°C: 32 mm²/s, kinematic viscosity at 100°C: 6 mm²/s, viscosity index: 134, sulfur content: less than 1 mass ppm, saturated content 99.5% by mass or more, aromatic content 0.5% by mass or less, %C_{P}: 79.2, %C_{N}: 20.8, %C_{A}: 0.0) and 1% by mass of an ester compound (glycerin monooleate) as an ashless friction modifier.

### (Lubricating Oil L2)

Only the same base oil as lubricating oil L1 (Group III mineral oil, kinematic viscosity at 40°C: 32 mm²/s, kinematic viscosity at 100°C: 6 mm²/s, viscosity index: 134, sulfur content: less than 1 mass ppm, saturated content 99.5% by mass or more, aromatic content 0.5% by mass or less, %Cp: 79.2, %C_{N}: 20.8, %C_{A}: 0.0) was used as lubricating oil L2.

### (Lubricating Oil L3)

Lubricating oil L3 was prepared in the same manner as lubricating oil L1, except that a phosphorus compound (oleyl acidic phosphoric acid ester amine salt) was used instead of the ester compound as the ashless friction modifier.

### (Lubricating Oil L4)

Lubricating oil L4 was prepared in the same manner as lubricating oil L1, except that an ether compound (glycerin oleyl ether) was used instead of the ester compound as the ashless friction modifier.

### (Lubricating Oil L5)

Lubricating oil L5 was prepared in the same manner as lubricating oil L1, except that an alcohol compound (oleyl alcohol) was used instead of the ester compound as the ashless friction modifier.

### (Lubricating Oil L6)

Lubricating oil L6 was prepared in the same manner as lubricating oil L1, except that an amide compound (oleoyl sarcosine) was used instead of the ester compound as the ashless friction modifier.

In Examples 1 to 13 and Comparative Examples 1 to 2, one each of the above seal members S1 to S4 and lubricating oils L1 to L6 was selected, and the coefficient of friction was measured for the combinations shown in Tables 2 and 3.

### (Measurement of Coefficient of Friction)

Using an MTM (MiniTraction Machine) tester (manufactured by PCS Instruments), the coefficient of friction was measured under the following conditions.
- Ball: 1/2 inch steel ball
- Disk: Seal member (40 × 40 × 2 mm)
- Load: 10 N
- Slip ratio: 200% (complete slip)
- Average speed: 0.1 m/s
- Oil temperature: 25°C

The measurement was performed three times for each combination of seal member and lubricating oil, and the average value of the coefficients of friction obtained in the three measurements was calculated. The results are shown in Tables 2 and 3.

**[Table 2]**

| | Example 1 | Comparative Example 1 | Comparative Example 2 | Example 2 | Example 3 | Example 4 | Example 5 | Comparative Example 3 | Comparative Example 4 |
|---|---|---|---|---|---|---|---|---|---|
| Type of seal member | S1 (present) | S3 (absent) | S4 (absent) | S1 (present) | S2 (absent) | S3 (absent) | S4 (absent) | S5 (absent) | S5 (absent) |
| Type of lubricating oil | L2 (absent) | L2 (absent) | L2 (absent) | L1 (present) | L1 (present) | L1 (present) | L1 (present) | L2 (absent) | L1 (present) |
| Coefficient of friction | 0.042 | 0.053 | 0.051 | 0.033 | 0.038 | 0.048 | 0.044 | 0.054 | 0.050 |

**[Table 3]**

| | Example 6 | Example 7 | Example 8 | Example 9 | Example 10 | Example 11 | Example 12 | Example 13 |
|---|---|---|---|---|---|---|---|---|
| Type of seal member | S1 (present) | S2 (absent) | S1 (present) | S2 (absent) | S1 (present) | S2 (absent) | S1 (present) | S2 (absent) |
| Type of lubricating oil | L3 (present) | L3 (present) | L4 (present) | L4 (present) | **L5** (present) | L5 (present) | L6 (present) | L6 (present) |
| Coefficient of friction | 0.037 | 0.039 | 0.039 | 0.044 | 0.038 | 0.043 | 0.039 | 0.042 |

In Tables 2 and 3, "(present)" means that an ashless friction modifier is contained, and "(absent)" means that an ashless friction modifier is not contained. The same applies to Table 4 described later.

Further, in Examples 14 to 16 and Comparative Example 5, one each of the above seal members S1 to S2, S5 and the following lubricating oils L7 to L8 was selected, and the coefficient of friction was measured in the same manner as above for the combinations shown in Table 4. The results are shown in Table 4.

### (Lubricating Oil L7)

Lubricating oil L7 was prepared by mixing 99% by mass of a base oil (Group V ester (trimethylolpropane trioleate), kinematic viscosity at 40°C: 47.7 mm²/s, kinematic viscosity at 100°C: 9.5 mm²/s, viscosity index: 189, sulfur content: less than 1 mass ppm) and 1% by mass of an ester compound (glycerin monooleate) as an ashless friction modifier.

### (Lubricating Oil L8)

Only the same base oil as lubricating oil L7 (Group V ester (trimethylolpropane trioleate), kinematic viscosity at 40°C: 47.7 mm²/s, kinematic viscosity at 100°C: 9.5 mm²/s, viscosity index: 189, sulfur content: less than 1 mass ppm) was used as lubricating oil L8.

**[Table 4]**

| | Example 14 | Example 15 | Example 16 | Comparative Example 5 |
|---|---|---|---|---|
| Type of seal member | S1 (present) | S1 (present) | S2 (absent) | S5 (absent) |
| Type of lubricating oil | L7 (present) | L8 (absent) | L7 (present) | L8 (absent) |
| Coefficient of friction | 0.036 | 0.038 | 0.040 | 0.048 |

### Reference Signs List

1: Oil/seal lubrication system, 2: Housing, 3: Rotating shaft (sliding member), 4: Reinforcing ring, 4a: Cylindrical portion, 4b: Inward flange portion, 5: Seal member, 6: Outer peripheral seal portion, 7: Seal lip, 8: Dust lip, 9: Sealing target side inclined surface, 10: Sliding surface, 11: Atmosphere side inclined surface, 14: Garter spring, A: Atmosphere side, O: Sealing target side.

## Claims

1. An oil/seal lubrication system comprising:
a seal member; and
a sliding member that moves relatively to the seal member and contacts the seal member via a lubricating oil,
wherein the seal member contains an inorganic filler, and
wherein at least one of the seal member and the lubricating oil contains an ashless friction modifier.

2. The oil/seal lubrication system according to claim 1, wherein both the seal member and the lubricating oil contain the ashless friction modifier.

3. The oil/seal lubrication system according to claim 1 or 2, wherein the inorganic filler is at least one selected from the group consisting of carbon black, metal oxides, metal hydroxides, and silicate minerals.

4. The oil/seal lubrication system according to claim 1 or 2, wherein the ashless friction modifier is at least one selected from the group consisting of fatty acid ester compounds, phosphorus compounds, ether compounds, alcohol compounds, amide compounds, amine compounds, imide compounds, sulfur compounds, and phosphorus-sulfur compounds.

5. The oil/seal lubrication system according to claim 2, wherein the friction modifier in the seal member and the friction modifier in the lubricating oil are fatty acid ester compounds.

6. The oil/seal lubrication system according to claim 5, wherein the fatty acid ester compound contains a compound having a hydrocarbon group, an ester group, and a hydroxyl group.

7. The oil/seal lubrication system according to claim 1 or 2, wherein the lubricating oil contains at least one base oil selected from the group consisting of base oils classified into any of Group I, Group II, Group III, Group IV, and Group V of the API base oil classification.

8. The oil/seal lubrication system according to claim 1 or 2, wherein the lubricating oil contains a base oil having a viscosity index of 80 or more.

9. The oil/seal lubrication system according to claim 1 or 2, wherein the lubricating oil contains a base oil having %Cp of 60 or more and %C_{A} of 5 or less.

10. The oil/seal lubrication system according to claim 1 or 2, wherein the lubricating oil contains an oxygen-containing base oil.

11. The oil/seal lubrication system according to claim 1 or 2, wherein a coefficient of friction measured with an MTM tester using the seal member and the lubricating oil is 0.050 or less.
